# EUROPÄISCHE PATENTANMELDUNG

(11) **EP 2 149 729 A1**
(43) Veröffentlichungstag der Anmeldung: **03.02.2010**
(21) Anmeldenummer: 09166876.4
(22) Anmeldetag: 30.07.2009
(51) Int. Cl.: F16K 11/087

(54) **Kugelabsperrventil mit T-Anschluss**

(30) Priorität: 01.08.2008 DE 202008010289 U
(71) Anmelder: Interforge Klee GmbH, 27356 Rotenburg/Wümme (DE)
(72) Erfinder: Klee, Klaus, 27383 Scheeßel (DE)
(74) Vertreter: Birken, Lars

(57) **Zusammenfassung**

Die vorliegende Erfindung betrifft ein Kugelabsperrventil für den Anschluss einer Schleife, wobei das Kugelabsperrventil ein Ventilgehäuse, eine in dem Ventilgehäuse drehbar um eine Achse gelagerte Absperrkugel (3), ein Betätigungselement (2) zum Drehen der Absperrkugel relativ zum Ventilgehäuse, und ein in der Absperrkugel angeordnetes Sperrelement (80) aufweist, wobei das Kugelabsperrventil durch Drehung der Absperrkugel aus einer ersten Stellung, in welcher ein Medienfluss von der Gehäuseeinlassöffnung (10) durch die Kugeleinlassöffnung (50) und den Austrittsabschnitt (72) der Kugelschleifenanschlussöffnung (70) zur Gehäuseschleifenanschlussöffnung (30) und von der Gehäuseschleifenanschlussöffnung (30) durch den Eintrittsabschnitt (73) der Kugelschleifenanschlussöffnung (70) und die Kugelauslassöffnung (60) zur Gehäuseauslassöffnung (20) freigegeben ist, in eine zweite Stellung, in welcher keine Fluidverbindung zwischen der Gehäuseeinlassöffnung (10) und der Gehäuseschleifenanschlussöffnung (30) besteht, verstellbar ist.

## Beschreibung

Die Erfindung betrifft ein Kugelabsperrventil für den Anschluss einer Schleife mit einem Ventilgehäuse und einer darin angeordneten Absperrkugel.

Unter einer Schleife im Sinne dieser Beschreibung und der anhängenden Ansprüche soll hierbei ein in sich geschlossenes Volumen verstanden werden, das mit einer Eintritts- und einer Austrittsöffnung an das erfindungsgemäße Ventil angeschlossen werden kann. Dabei ist der Begriff Eintrittsöffnung und Ausstrittsöffnung funktionell zu verstehen, und zwar in dem Sinne, dass eine oder mehrere Öffnungen vorhanden sind, die den Eintritt und den Austritt eines Fluids ermöglichen. Im Sinne der Erfindung kann eine solche Eintritts- und Austrittsöffnung körperlich auch durch eine einzige Öffnung verwirklicht werden, die aufgrund entsprechender Strömungsgestaltung bei Anschluß an eine Schleife eine gewisse Durchströmung dieser Schleife ermöglicht.

Eine solche Schleife tritt beispielsweise in einem Ausdehnungsbehälter auf, das in Wasserkreisläufen erforderlich ist, in denen z. B. durch Erwärmung des im Kreislauf befindlichen Wassers eine Volumen kompensation für das Volumen erforderlich ist, um das sich das im Kreislauf befindliche Wasser durch eine Erwärmung ausdehnt bzw. durch eine Abkühlung verringert.

Solche Ausdehnungsbehälter werden sowohl im Grauwasser- als auch im Trinkwasserbereich benötigt, wenn erwärmtes Wasser zur Verfügung gestellt wird. Eine spezifische Problematik, die in einem solchen Fall in einem Trinkwasserkreislauf auftritt, ist, dass es aus hygienischen Gründen erforderlich und in vielen Ländern durch entsprechende Trinkwasservorschriften vorgeschrieben ist, dass alle in den Trinkwasserkreislauf eingebundene Bereiche zumindest bei einer Trinkwasserentnahme durchströmt werden müssen. Auf diese Weise sollen stagnierende Bereiche innerhalb der Trinkwasserinstallation vermieden werden, um einerseits die Funktionalität gefährdende Ablagerungen zu verhindern und andererseits durch solche Ablagerungen und durch andere Vorgänge hervorgerufene hygienische Gefährdungen, wie beispielsweise die Bildung von Legionellen, zu verhindern.

Es ist für solche Anwendungsfälle bekannt, einen Ausdehnungsbehälter mittels eines T-Stücks in die Trinkwasserleitung einzubinden. Durch eine solche Anschlussweise wird bei Durchströmung der Leitung eine gewisse Durchströmung des Ausdehnungsbehälters erzielt, wodurch die Auflagen von Trinkwasserverordnungen erfüllt und einer hygienischen Gefährdung vorgebeugt werden können. Nachteilig an einer solchen Ausgestaltung ist jedoch, dass die Durchströmung des Ausdehnungsbehälters nur in geringem Maße stattfindet und nicht vollständig die Bildung von Ablagerungen vermeiden kann.

Es ist bekannt, zur Vermeidung dieser Problematik den Ausdehnungsbehälter mit einer entsprechend gezielten Strömungsführung im Inneren auszugestalten, wodurch eine bessere Durchströmung und die Vermeidung von Totwassergebieten erreicht werden kann. Allerdings wird hierdurch eine aufwendige Art der Strömungsführung innerhalb des Ausdehnungsbehälters erforderlich.

Ein weiterer Nachteil bekannter Anschlussmethoden bzw. -vorrichtungen für solche Schleifen, wie Ausdehnungsbehälter, liegt darin, dass bei Montage- oder Wartungsarbeiten, in denen der Ausdehnungsbehälter vom Leitungsnetz zeitweise getrennt werden soll, eine zentrale Unterbrechung des Kreislaufs erforderlich wird, um das Ausströmen von Flüssigkeit zu verhindern. Dies macht jedoch aufwendige Entleerungsmaßnahmen erforderlich und erschwert damit Wartungs-und Montagearbeiten.

Es ist bekannt, zur Vermeidung dieses Nachteils, sowohl vor als auch hinter dem T-Stück eine Absperrarmatur vorzusehen, um hierdurch den Ausgleichsbehälter beidseits von dem T-Anschlussstück vom Leitungsnetz trennen zu können und die Entleerung zu erleichtern. Allerdings bedingt dies einen erheblichen zusätzlichen Montageaufwand aufgrund der erforderlichen zumindest drei Armaturbauteile, die zudem um ein weiteres Armaturbauteil zur Entleerung ergänzt werden müssen. Eine solche Armaturkombination wird häufig den beengten Einbauverhältnissen nicht gerecht und ist zudem aufgrund der erforderlichen vielfachen Verbindungen kostenintensiv.

Aus EP 0 602 430 B1 ist ein Ausdehnungsgefäß für erwärmtes Trinkwasser mit einer gegenüber dem zuvor beschriebenen Stand der Technik geänderten Anschlussarmatur bekannt. Die Anschlussarmatur weist zwei Öffnungen auf, deren Querschnitte in einer Ebene liegen und von denen eine als Einlass- und eine als Auslassöffnung für den Anschluss an das Trinkwasser ausgeführt ist. Diese Einlass- und Auslassöffnungen sind über einen direkten, innerhalb der Anschlussarmatur ausgebildeten und nicht-verschließbaren Kanal miteinander verbunden, so dass ein Großteil des durch die Einlassöffnung strömenden Wassers direkt durch die Auslassöffnung die Anschlussarmatur wieder verlassen kann.

Des Weiteren ist innerhalb der Anschlussarmatur eine Absperrkugel ausgebildet, die zwei voneinander getrennte Kanäle aufweist. Die Absperrkugel ist um eine zentrale, mittig durch die Absperrkugel hindurchlaufende Achse drehbar gelagert. Ein Teil des durch die Einlassöffnung strömenden Wassers wird über eine Eintrittsöffnung, deren Durchströmungsrichtung koaxial zur Drehachse liegt, dem Innenraum der Absperrkugel zugeführt und tritt in einen der beiden Durchflusskanäle der Absperrkugel ein. Dieses Wasser verlässt die Absperrkugel etwa tangential und tritt in einen innerhalb der Anschlussarmatur ausgebildeten Kanalabschnitt ein, der mit einer Eintrittsöffnung in das Ausdehnungsgefäß verbunden ist. Dieses Wasser durchströmt hiernach den Ausdehnungsbehälter und sorgt daher für eine teilweise Durchströmung des Ausdehnungsbehälters. Nach Durchströmung des Ausdehnungsbehälters tritt das Wasser wiederum über einen in der Anschlussarmatur ausgebildeten Kanal in den anderen der beiden in der Absperrkugel ausgebildeten Kanäle ein und durchströmt sie bis zu einer Austrittsöffnung, die im Bereich der Auslassöffnung der Anschlussarmatur mündet. Das durch den direkten Kanal strömende Wasser, welches aus der Auslassöffnung der Anschlussarmatur austritt, übt eine Sogwirkung auf das Wasser aus, welches durch die Absperrkugel geführt wird und sorgt daher für eine Durchströmung des Ausdehnungsbehälters.

Die Absperrkugel kann durch Verdrehung um die Drehachse in eine Position gebracht werden, in welcher keine Durchströmung der Kanäle möglich ist. In dieser Position ist eine Demontage des Ausdehnungsbehälters möglich, ohne dass hierzu weitere Absperrarmaturen innerhalb des Trinkwassernetzes betätigt werden müssten.

Die so vorbekannte spezifische Absperrarmatur für den Anschluss eines Ausbildungsbehälters vermag zwar eine Reihe von Anforderungen an eine solche spezifische Anschlusssituation zu erfüllen, jedoch ist die Fertigung der Anschlussarmatur aufgrund ihrer zerklüfteten und mit vielen Hinterschnitten versehenen Geometrie sehr aufwendig und daher kostenintensiv. Zudem erlaubt die Anschlussarmatur nicht in einfacher Weise eine Entleerung der angeschlossenen Schleife, wenn beispielsweise Montage- oder Wartungsarbeiten notwendig sind. Schließlich kann die Anschlussarmatur aufgrund der nebeneinander angeordneten Ein- und Auslassöffnung nur unter zusätzlichem Verlegeaufwand in eine bestehende geradlinige Leitung eingebunden werden.

Der Erfindung liegt die Aufgabe zugrunde, eine Anschlussarmatur bereitzustellen, die es ermöglicht, innerhalb eines Trinkwassernetzes ein mit einer Schleife versehenes Gerät, wie beispielsweise einen Ausdehnungsbehälter, in durchströmter Weise anzuschließen und zugleich eine Möglichkeit für die einfache Durchführung von Montage- und Wartungsarbeiten an einem solchen, eine Schleife beinhaltenden Geräts bereitzustellen.

Diese Aufgabe wird erfindungsgemäß gelöst durch ein Ventilgehäuse mit einer Gehäuseeinlassöffnung, einer Gehäuseauslassöffnung, einer Gehäuseschleifenanschlussöffnung, eine in dem Ventilgehäuse drehbar um eine Achse gelagerte Absperrkugel mit einer Kugeleinlassöffnung, einer Kugelauslassöffnung und einer mit der Kugeleinlass- und Kugelauslassöffnung in Fluidverbindung stehenden Kugelschleifenanschlussöffnung, ein Betätigungselement zum Drehen der Absperrkugel relativ zum Ventilgehäuse, ein in der Absperrkugel angeordnetes Sperrelement, welches die Kugelschleifenanschlussöffnung in einen Austritts-und einen Eintrittsabschnitt unterteilt und den direkten Fluss von Medium von der Kugeleinlassöffnung zur Kugelauslassöffnung zumindest teilweise, vorzugsweise vollständig verhindert,
- wobei das Kugelabsperrventil durch Drehung der Absperrkugel aus
   ○ einer ersten Stellung, in welcher ein Medienfluss von der Gehäuseeinlassöffnung durch die Kugeleinlassöffnung und den Austrittsabschnitt der Kugelschleifenanschlussöffnung zur Gehäuseschleifenanschlussöffnung und von der Gehäuseschleifenanschlussöffnung durch den Eintrittsabschnitt der Kugelschleifenanschlussöffnung und die Kugelauslassöffnung zur Gehäuseauslassöffnung freigegeben ist,
      in
   ○ eine zweite Stellung, in welcher keine Fluidverbindung zwischen der Gehäuseeinlassöffnung und der Gehäuseschleifenanschlussöffnung besteht,
   verstellbar ist.

Das erfindungsgemäße Kugelabsperrventil zeichnet sich durch eine in fertigungstechnischer Hinsicht vorteilhaft ausgeführte Konstruktion aus, indem ein Gehäuse mit insgesamt drei Öffnungen und einer darin angeordneten Absperrkugel mit ebenfalls insgesamt drei Öffnungen miteinander in solcher Art kombiniert werden, dass die für die Funktion des Kugelabsperrventils erforderlichen Eigenschaften ohne fertigungstechnisch kompliziert geführte Kanäle, Trennwände, Hinterschnitte oder dergleichen erreicht werden können. Die in der Erfindung verwendete Absperrkugel zeichnet sich durch insgesamt drei Öffnungen aus, die in solcher Weise miteinander verbunden sind, dass von einer Kugeleinlassöffnung strömendes Fluid zu einer Kugelschleifenanschlussöffnung strömen kann und von dieser Kugelschleifenanschlussöffnung zu einer Kugelauslassöffnung strömen kann. Diese Kugelschleifenanschlussöffnung ist durch ein in der Absperrkugel angeordnetes Sperrelement in zwei Abschnitte unterteilt, nämlich einen Austritts- und einen Eintrittsabschnitt, die in solcher Weise mit der Kugeleinlass- bzw. -auslassöffnung verbunden sind, dass ein durch die Kugeleinlassöffnung strömendes Fluid zum Austrittsabschnitt strömt und ein durch den Eintrittsabschnitt strömendes Fluid zur Kugelauslassöffnung strömt. Durch diese Ausgestaltung kann eine teilweise oder vollständige Durchströmung der Schleife erzielt werden, ohne dass hierfür zusätzliche Armaturen benötigt werden und zugleich eine einfache Wartung und Montage einer angeschlossenen Schleife, wie beispielsweise einem Ausgangsbehälter, ermöglicht werden. Das in der Absperrkugel angeordnete Sperrelement kann sowohl einstückig mit der Absperrkugel ausgeführt sein als auch separat hierzu in die Absperrkugel eingesetzt sein, um die Sperrwirkung zwischen Kugeleinlass- und Kugelauslassöffnung zu erzielen.

Unter einer direkten Strömung zwischen Kugeleinlass- und -auslassöffnung ist hierbei eine Strömung zu verstehen, die nicht die Schleife durchläuft. Vorzugsweise verläuft eine solche direkte Strömung zudem auf einem geradlinigen Weg zwischen Kugeleinlass- und auslassöffnung.

Das erfindungsgemäße Kugelabsperrventil ist in der ersten Stellung für den Durchfluss der Schleife ausgebildet, und diese Stellung stellt den normalen Betriebszustand dar. Durch die Gehäuseeinlassöffnung eintretendes Wasser wird in dieser ersten Stellung zur Gehäuseauslassöffnung geführt und durchströmt auf diesem Weg die Absperrkugel und die an die Gehäuseschleifenanschlussöffnung angeschlossene Schleife.

In der zweiten Stellung wird zumindest die Fluidverbindung zwischen der Gehäuseeinlassöffnung und der Gehäuseschleifenanschlussöffnung unterbrochen, wodurch keine direkte Verbindung von der einlassseitigen Druckseite in die Schleife besteht. In dieser zweiten Stellung sind Montage- und Wartungsarbeiten an der Schleife möglich, ohne dass hierzu weitere Absperrarmaturen vorgesehen bzw. betätigt werden müssen, um ein unerwünschtes Ausströmen von Fluid zu verhindern.

Gemäß einer ersten bevorzugten Ausführungsform besteht in der zweiten Stellung keine Fluidverbindung zwischen der Gehäuseeinlassöffnung und der Gehäuseauslassöffnung. Auf diese Weise wird in der zweiten Stellung nicht nur verhindert, dass Fluid von der Gehäuseeinlassöffnung in die Schleife strömt, sondern auch Fluid von der Gehäuseeinlassöffnung zur Gehäuseauslassöffnung strömt, und hierdurch werden die Bereiche, in denen Montage- und Wartungsarbeiten durchgeführt werden können, erweitert.

Gemäß einer weiteren bevorzugten Ausführungsform sind die Durchflussrichtungen der Gehäuseeinlassöffnung und Gehäuseauslassöffnung parallel, vorzugsweise koaxial, zueinander angeordnet. Diese Ausführungsform ermöglicht die vorteilhafte Einbaulage des erfindungsgemäßen Kugelabsperrventils in eine gerade Leitungsführung, ohne dass für den Einbau etwaige Winkelstücke oder dergleichen erforderlich wären.

Noch weiter ist es bevorzugt, wenn die Durchflussrichtungen der Kugeleinlassöffnung und Kugelauslassöffnung parallel, vorzugsweise koaxial, zueinander angeordnet sind und die Absperrkugel zwischen der ersten und der zweiten Stellung um 90° verdreht wird. Diese Ausgestaltung ermöglicht eine kostengünstige Fertigung der Absperrkugel, da die Kugeleinlass- und -auslassöffnung ohne Hinterschnitte gefertigt werden können und daher die Absperrkugel in vorteilhafter Weise durch ein Gießverfahren oder ein spanendes Verfahren kostengünstig gefertigt werden kann. Die parallele, insbesondere koaxiale Anordnung von Kugeleinlass- und -auslassöffnung ist insbesondere in Verbindung mit der parallelen, vorzugsweise koaxialen Anordnung der Gehäuseeinlass- und - auslassöffnung kombinierbar, um durch eine solche kombinierte Ausgestaltung eine geradlinige Einbaulage und Anschlussführung in der ersten Stellung zu ermöglichen und eine Sperrung dieser Durchströmung durch Verschwenkung der Absperrkugel um 90° erzielen zu können.

Noch weiter ist es bevorzugt, wenn die Durchflussrichtungen der Gehäuseeinlassöffnung und der Gehäuseauslassöffnung senkrecht zur Drehachse der Absperrkugel angeordnet sind. Durch eine solche Ausrichtung der Drehachse in Bezug zur Gehäuseeinlass- und -auslassöffnung wird wiederum eine kompakte und fertigungstechnisch kostengünstige Ausgestaltung des erfindungsgemäßen Kugelabsperrventils ermöglicht und zudem eine einfache Befestigung eines Betätigungselements an der Absperrkugel zur Aufbringung eines für die Drehung erforderlichen Drehmoments ermöglicht. Wiederum ist diese vorteilhafte Ausgestaltung insbesondere bevorzugt in Kombination mit der parallelen, vorzugsweise koaxialen Anordnung von Kugeleinlass- und -auslassöffnung bzw. Gehäuseeinlass- und -auslassöffnung.

Noch weiter ist es bevorzugt, dass die Durchflussrichtungen der Kugeleinlassöffnung und der Kugelauslassöffnung senkrecht zur Drehachse der Absperrkugel angeordnet sind. Auch für diese vorteilhafte Ausgestaltung spricht die dadurch ermöglichte kostengünstige Fertigung und die insbesondere in Kombination mit den drei zuvor genannten Ausführungsformen vorteilhafte Funktionsweise und Fertigungsweise des erfindungsgemäßen Kugelabsperrventils.

Gemäß einer weiteren bevorzugten Ausführungsform ist vorgesehen, dass die Durchflussrichtungen der Gehäuseschleifenanschlussöffnung und/oder der Kugelschleifenanschlussöffnung parallel, vorzugsweise koaxial zur Drehachse der Absperrkugel angeordnet sind. Die Absperrkugel des erfindungsgemäßen Kugelabsperrventils kann in diesem Fall, insbesondere bei zusätzlicher Ausführung nach den vorgenannten bevorzugten Ausführungsformen, eine T-förmige Medienführung aufweisen, wobei der lange Schenkel des T in die Kugelschleifenanschlussöffnung mündet und in entsprechender Weise durch das Sperrelement in Längsrichtung unterteilt ist. Durch eine koaxiale, in bedingter Weise auch durch eine parallele Anordnung der Durchflussrichtung der Kugelschleifenanschlussöffnung zur Drehachse kann erreicht werden, dass die Kugelschleifenanschlussöffnung in ihrer Lage durch eine Verdrehung der Absperrkugel nicht verändert wird, so dass sie in einer permanent gleichbleibenden Anschlusssituation innerhalb des Kugelabsperrventils angeordnet ist. Die zum Erreichen der ersten bzw. zweiten funktionellen Stelle erforderlichen Verbindungen bzw. Sperrungen von Verbindungen werden in diesem Fall alleine durch entsprechende Sperrvorgänge an der Kugeleinlassöffnung und der Kugelauslassöffnung in Bezug auf die jeweilige Gehäuseeinlassöffnung bzw. Gehäuseauslassöffnung erzielt.

Noch weiter ist es bevorzugt, wenn in der ersten und zweiten Stellung die Gehäuseschleifenanschlussöffnung und die Kugelschleifenanschlussöffnung in Fluidverbindung miteinander, vorzugsweise deckungsgleich, sind. In diesem Fall ist die Kugelschleifenanschlussöffnung in permanenter Verbindung mit der Gehäuseschleifenanschlussöffnung, was insbesondere vorteilhaft ist, wenn beispielsweise eine Reinigung des Absperrkugelinnenraumes in der zweiten Stellung durch die Gehäuseschleifenanschlussöffnung wünschenswert ist.

Gemäß einer weiteren bevorzugten Ausführungsform ist eine am Gehäuse ausgebildete Entleerungsöffnung bereitgestellt, welche in der ersten Stellung keine Fluidverbindung mit der Gehäuseeinlassöffnung, Gehäuseauslassöffnung und Gehäuseschleifenanschlussöffnung hat und in der zweiten Stellung eine Fluidverbindung mit der Gehäuseschleifenanschlussöffnung hat. Durch eine solche Entleerungsöffnung kann das Kugelabsperrventil selbst sowie eine an die Gehäuseschleifenanschlussöffnung angeschlossene Schleife, wie beispielsweise ein Ausdehnungsbehälter, entleert werden, bevor Wartungsarbeiten ausgeführt werden. In die Entleerungsöffnung kann insbesondere ein Entleerungsventil eingesetzt sein, wie beispielsweise ein Federkraft-betätigtes oder manuell betätigtes Ventil oder dergleichen.

Dabei ist es insbesondere bevorzugt, wenn die Entleerungsöffnung in der zweiten Stellung durch einen oder beide Abschnitte der Kugelschleifenanschlussöffnung eine Fluidverbindung mit der Gehäuseschleifenanschlussöffnung hat. Diese Ausgestaltung ermöglicht eine konstruktiv einfache und funktionelle Geometrie des erfindungsgemäßen Kugelabsperrventils, indem die Bewegung der Absperrkugel dafür genutzt werden kann, die Entleerungsöffnung in der zweiten Stellung mit der Gehäuseschleifenanschlussöffnung zu verbinden und in der ersten Stellung entsprechend davon zu trennen. Dabei ist es noch weiter bevorzugt, wenn die Entleerungsöffnung in der zweiten Stellung keine Fluidverbindung mit der Gehäuseeinlassöffnung und der Gehäuseauslassöffnung hat. Hierdurch wird verhindert, dass durch die Entleerungsöffnung in der zweiten Stellung Fluid austritt, das auf der Seite der Gehäuseeinlassöffnung oder der Gehäuseauslassöffnung vorhanden ist, wenn in der zweiten Stellung die Montage- oder Wartungsarbeiten durchgeführt werden.

Gemäß einer weiteren bevorzugten Ausführungsform ist das Sperrelement an der Absperrkugel zur gemeinsamen Drehung mit dieser befestigt. Mit dieser Fortbildung wird erreicht, dass sich das Sperrelement gemeinsam mit der Absperrkugel dreht und folglich die Ausrichtung des Sperrelements infolge dieser Drehung verändert wird. Dies kann insbesondere für strömungsleitende Funktionen genutzt werden, beispielsweise um die Entleerung der angeschlossenen Schleife zu erleichtern. Weiterhin stellt diese Ausführungsform eine insoweit vereinfachte Herstellungs- und Montagemöglichkeit dar, als dass Sperrelement und Absperrkugel vorgefertigt und insbesondere einstückig hergestellt werden können.

Gemäß einer weiteren bevorzugten, zu der vorgenannten Ausführungsform alternativen Ausgestaltung ist das Sperrelement am Ventilgehäuse befestigt, insbesondere im Bereich der Gehäuseschleifenanschlussöffnung, sodass die Absperrkugel relativ zum Sperrelement drehbar ist.

Diese Bauweise erreicht, dass sich das Absperrelement durch die Befestigung am Gehäuse in seiner Position nicht ändert, wenn die Absperrkugel gedreht wird. Hierbei kann die Strömungswirkung, die Sperrwirkung und gegebenenfalls die Teilsperrung und dergleichen des Sperrelements unabhängig von der Position der Absperrkugel wirken, was für bestimmte Ausgestaltungen des erfindungsgemäßen Kugelabsperrventils in Abhängigkeit der Lage der Anschlüsse vorteilhaft ist.

Bevorzugte Ausführungsformen der Erfindung werden anhand der anhängenden Figuren beschrieben. Darin zeigen:
- Figur 1:: Eine Seitenansicht einer bevorzugten Ausführungsform des erfindungsgemäßen Kugelabsperrventils in einer geöffneten Stellung,
- Figur 2:: Eine Frontansicht der Ausführungsform der Fig. 1,
- Figur 3:: Eine Draufsicht der Ausführungsform der Fig. 1,
- Figur 4:: Eine entlang der Linie M-M in Fig. 2 geschnittene, rückwärtige Seitenansicht der Ausführungsform der Fig. 1,
- Figur 5:: Eine entlang der Linie C-C in Fig. 4 geschnittene Rückansicht der Ausführungsform der Fig. 1,
- Figur 6:: Eine entlang der Linie D-D in Fig. 4 geschnittene Unteransicht der Ausführungsform der Fig. 1,
- Figur 7:: Eine entlang der Linie E-E in Fig. 4 geschnittene Draufsicht der Ausführungsform der Fig. 1,
- Fig. 8-14:: Ansichten gemäß den Figuren 1-7 der Ausführungsform der Fig. 1 in einer geschlossenen Stellung,
- Fig. 15-21:: Ansichten gemäß den Figuren 8-14 der Ausführungsform der Fig. 1 in einer geschlossenen Ventilstellung mit einem zusätzlichen Entleerungsventil,
- Fig. 22-28:: Ansichten gemäß den Figuren 1-7 einer zweiten Ausführungsform des erfindungsgemäßen Kugelabsperrventils in einer geöffneten Stellung, und
- Fig. 29-35:: Ansichten gemäß den Figuren 22-28 der zweiten Ausführungsform in einer geschlossenen Stellung.

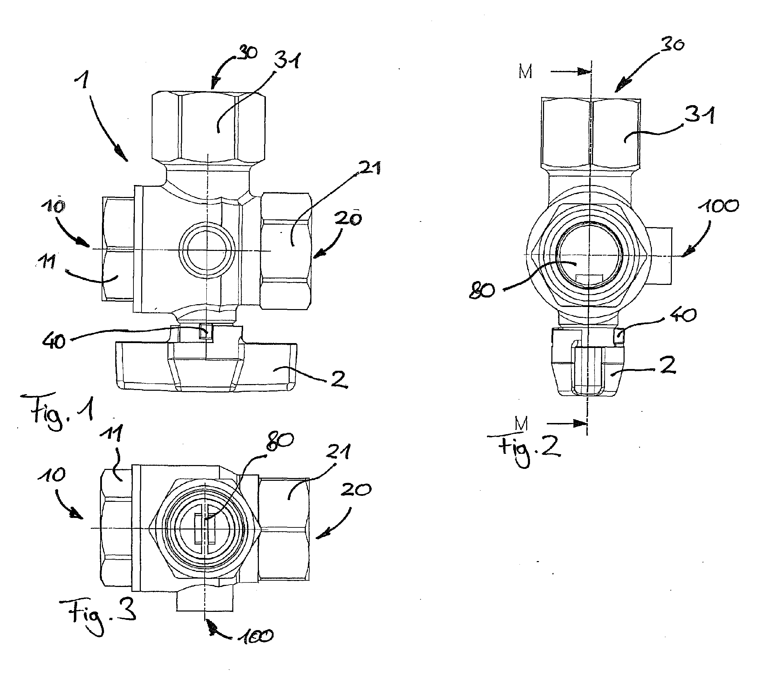

Bezug nehmend zunächst auf die Figuren 1 bis 3 weist die bevorzugte Ausführungsform des erfindungsgemäßen Kugelabsperrventils ein Gehäuse 1 auf, an dem eine Gehäuseeinlassöffnung 10, eine Gehäuseauslassöffnung 20 und eine Gehäuseanschlussöffnung 30 ausgebildet sind. Gehäuseeinlassöffnung 10, Gehäuseauslassöffnung 20 und Gehäuseanschlussöffnugn 30 sind so angeordnet, dass die jeweiligen Durchflussrichtungen in einer Ebene liegen und somit ein T-Stück bilden.

An Gehäuseeinlassöffnung 10, Gehäuseauslassöffnung 20 und Gehäuseanschlussöffnung 30 sind jeweils Außensechskante 11, 21, 31 ausgebildet, die dazu dienen, eine Gegenhaltekraft aufzubringen, wenn ein Rohr, ein Adapter, eine Armatur oder dergleichen an dem Gehäuse 1 in der jeweiligen Öffnung befestigt werden soll.

Sowohl in der Gehäuseeinlassöffnung 10 als auch in der Gehäuseauslassöffnung 20 und der Gehäuseanschlussöffnung 30 ist jeweils ein Innengewinde 12, 22, 32 angeordnet, um ein mit einem entsprechenden Außengewinde versehenes Rohr, Anschlusselement oder eine entsprechende Armatur an der entsprechenden Öffnung befestigen zu können.

In der Gehäuseanschlussöffnung ist darüber hinaus in der zur Absperrkugel weisenden Seite des Innengewindes 32 ein Dichtungsring 33 angeordnet, der eine Abdichtung zu einem in das Innengewinde eingeschraubten Rohr, Anschlussadapter, Armatur oder dergleichen herstellt.

Gegenüberliegend zur Gehäuseanschlussöffnung 30 ist am Gehäuse 1 ein Betätigungsgriff 2 angeordnet. Der Betätigungsgriff 2 ist um 90° um eine Drehachse verschwenkbar. Die Drehachse des Betätigungsgriffs 2 liegt koaxial zur Durchflussrichtung der Gehäuseanschlussöffnung 30. Die Schwenkbewegung des Betätigungsgriffs 2 wird durch eine am Gehäuse befestigte Nase 40 begrenzt.

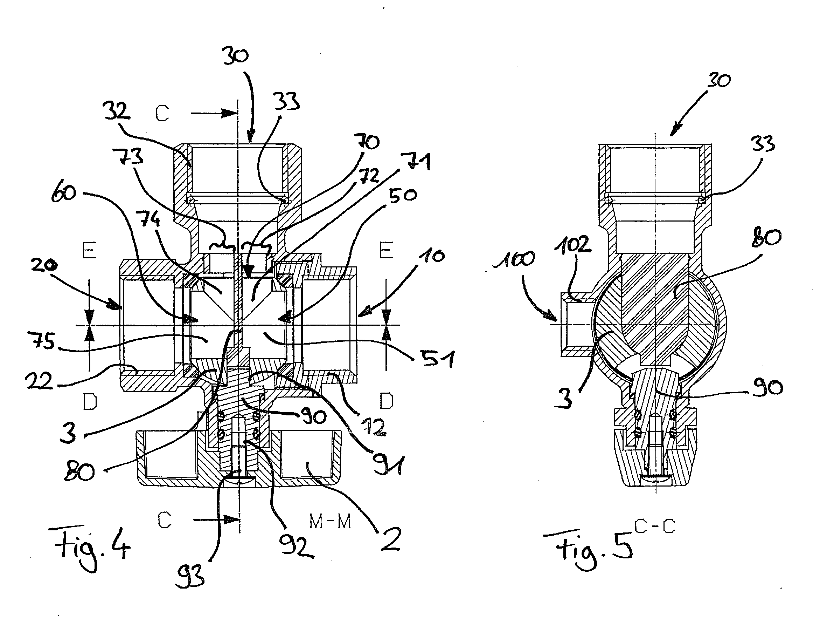

Wie insbesondere aus den geschnittenen Ansichten der Figuren 4 bis 7 ersichtlich, ist innerhalb des Gehäuses 1 eine Absperrkugel 3 angeordnet. Die Absperrkugel 3 weist in kongruenter Weise zum Gehäuse 1 eine Kugeleinlassöffnung 50, eine Kugelauslassöffnung 60 und eine Kugelanschlussöffnung 70 auf. In der in den Figuren 1 bis 7 abgebildeten geöffneten Stellung liegen die jeweiligen Öffnungen 50, 60, 70 der Absperrkugel 3 fluchtend mit den entsprechenden Öffnungen 10, 20, 30 des Gehäuses 1, so dass Wasser, welches durch die Gehäuseeinlassöffnung 10 eintritt, weiter durch die Kugeleinlassöffnung 50 in den Innenraum derAbsperrkugel eintreten kann.

Im Innenraum der Absperrkugel ist eine Absperrwand 85 eines Sperrelements 80 angeordnet, welche den direkten Durchfluss von der Kugeleinlassöffnung zur Kugelauslassöffnung 60 unterbricht und auf diese Weise in der geöffneten Stellung in gleicher Weise den direkten Durchfluss von der Gehäuseeinlassöffnung 10 zur Gehäuseauslassöffnung 20 verhindert. Die Absperrwand 85 erstreckt sich in den Bereich der Kugelanschlussöffnung 70 und unterteilt daher diese Kugelanschlussöffnung 70 in einen Austrittsabschnitt 72 und einen Eintrittsabschnitt 73. Wasser, welches durch die Kugeleinlassöffnung 50 in den Kugelinnenraum eintritt, wird durch die Absperrwand 85 abgelenkt und zum Austrittsabschnitt 72 gelenkt. Der Eintrittsabschnitt 73 ist auf der in Bezug auf die Absperrwand 80 dem Austrittsabschnitt 72 gegenüberliegenden Seite ausgebildet. Durch den Eintrittsabschnitt 73 tritt das dann wieder eintretende Wasser in den Kugelinnenraum bei Abschnitt 74 ein, wird wiederum um 90° umgelenkt und tritt in den Kugelinnenraumabschnitt 75 ein, und verlässt dann die Absperrkugel durch die Kugelauslassöffnung 60 und kann durch die Gehäuseauslassöffnung 20 aus der Kugelabsperrarmatur strömen.

Grundsätzlich ist die Gehäuseanschlussöffnung 30 ausgebildet, um darin einen Anschlussadapter anordnen zu können, der eine in Längsrichtung verlaufende Trennwand hat, die fluchtend zur Absperrwand 85 liegt und sich dieser dichtend oder unter Ausbildung eines nur geringen Spaltes anschließt. Auf diese Weise ist es möglich, den aus dem Austrittsabschnitt 72 strömenden Wasserstrom in fortlaufend getrennter Weise aus der Gehäuseanschlussöffnung 30 herauszuführen, durch eine entsprechend an die Gehäuseanschlussöffnung 30 angeschlossene Schleife zu führen und hierauf folgend wieder in die Gehäuseanschlussöffnung 30 und den Eintrittsabschnitt 73 auf der anderen Seite einströmen zu lassen.

Auf diese Weise erreicht die erfindungsgemäße Kugelsperrarmatur eine vollständige Durchströmung einer an die Gehäuseanschlussöffnung 30 angeschlossenen Schleife und verhindert dadurch zuverlässig die Bildung von Ablagerungen, Legionellen oder dergleichen in dieser Schleife. Dabei ist zu verstehen, dass als Schleife unterschiedliche Armaturen oder Geräte zu verstehen sind, wie beispielsweise ein Ausdehnungsbehälter.

Wie insbesondere aus den Figuren 4 und 5 ersichtlich, ist der Betätigungsgriff 2 über eine Welle 90 drehmomentsteif mit der Absperrkugel 3 gekoppelt. Zu diesem Zweck ist die Welle 90 an ihrem der Absperrkugel zuweisendem Ende mit einem nicht-zylindrischen Zapfen formschlüssig in eine entsprechend kongruente Ausnehmung in der Absperrkugel eingesetzt. Die Ausnehmung in der Absperrkugel dient zugleich dazu, die separat von der Absperrkugel ausgeführte Absperrwand 80 innerhalb der Absperrkugel zu verankern.

Auf ihrer der Absperrkugel abweisenden Seite ist die Welle 90 wiederum mit einem nicht-zylindrischen Endabschnitt formschlüssig mit dem Betätigungsgriff 2 verbunden und dieser Betätigungsgriff 2 durch eine in ein axiales Innengewinde 92 der Welle 90 eingeschraubte Sicherungsschraube 93 gegen Herabfallen gesichert.

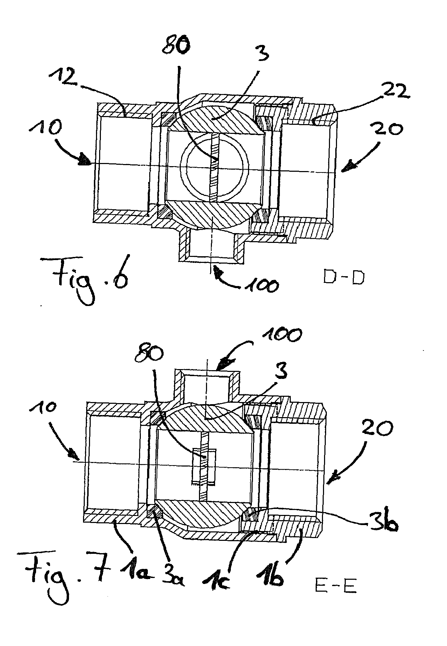

Aus den Figuren 6 und 7 geht die Fertigungs- und Montageweise des Gehäuses 1 hervor. Das Gehäuse 1 ist unterteilt in einen in den Figuren 6 und 7 links dargestellten ersten Gehäuseabschnitt 1a und einen in diesen ersten Gehäuseabschnitt 1a mittels einer Gewindeverbindung 1c eingeschraubten zweiten Gehäuseabschnitt 1 b. Im Gehäuseabschnitt 1a ist ein erster Dichtungsring 3a angeordnet, der die Absperrkugel gegen den ersten Gehäuseabschnitt 1a abdichtet. Im zweiten Gehäuseabschnitt 1 b ist in entsprechender Weise ein zweiter Dichtungsring 3b angeordnet, der die Absperrkugel auf der dem Dichtungsring 3a gegenüberliegenden Seite gegen den zweiten Gehäuseabschnitt 1b abdichtet. Durch diese Konstruktionsweise kann die Absperrkugel zunächst in den Gehäuseabschnitt 1a eingelegt werden und hierauf folgend durch Einschrauben des zweiten Gehäuseabschnitts in dichtender Weise an die Dichtungsringe 3a, b angepresst und innerhalb des Gehäuses formschlüssig befestigt werden.

Wie weiterhin insbesondere aus den Figuren 5 bis 7 ersichtlich, ist am Gehäuse ein Entleerungsanschluss 100 vorgesehen, dessen Durchströmungsrichtung senkrecht zu der Ebene liegt, die durch die Durchströmungsrichtungen der Gehäuseeinlassöffnung 10, Gehäuseauslassöffnung 20 und Gehäuseanschlussöffnung 30 aufgespannt wird.

Die Entleerungsöffnung 100 weist in gleicher Weise wie die anderen Öffnungen 10, 20, 30 ein Innengewinde 102 zum Anschluss eines Rohres, Anschlussadapters oder dergleichen auf. In der in den Figuren 1 bis 7 abgebildeten geöffneten Stellung des Kugelabsperrventils ist die Entleerungsöffnung durch die Absperrkugel verschlossen.

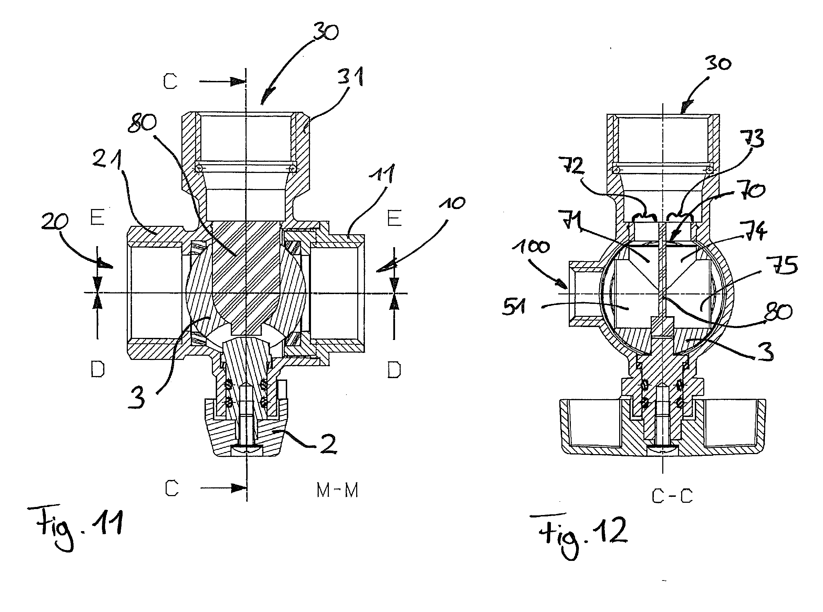

Wie insbesondere im Abgleich der Figuren 4 und 11 zu erkennen ist, steht das Sperrelement in der geöffneten Stellung gemäß Figur 4 senkrecht zur Durchströmungsrichtung der Gehäuseeinlassöffnung 10 und Gehäuseauslassöffnung 20 und versperrt daher den direkten Durchfluss von der Gehäuseeinlassöffnung zur Gehäuseauslassöffnung. Das durch die Gehäuseeinlassöffnung 10 eintretende Wasser wird daher vollständig nach oben umgelenkt und in den Austrittsabschnitt 72 geleitet.

In der geschlossenen Stellung hingegen steht das Sperrelement 80 parallel zur Durchflussrichtung der Gehäuseeinlassöffnung 10 und Gehäuseauslassöffnung 20. Zwar hat dies aufgrund der Sperrung von Gehäuseeinlassöffnung 10 und Gehäuseauslassöffnung 20 in der geschlossenen Stellung keine Auswirkung auf deren Durchströmung, allerdings hat es zur Folge, dass die Entleerungsöffnung 100, zu deren Durchströmungsrichtung das Sperrelement 80 in der geschlossenen Stellung senkrecht steht, wie insbesondere aus Figur 12 ersichtlich, nur durch den Austrittsabschnitt 72 mit der Gehäuseschleifenanschlussöffnung 30 kommuniziert.

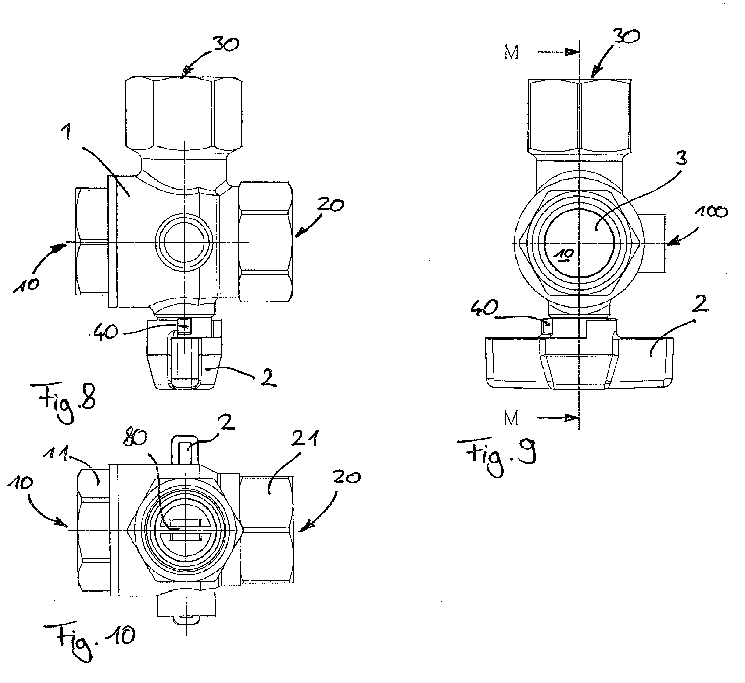

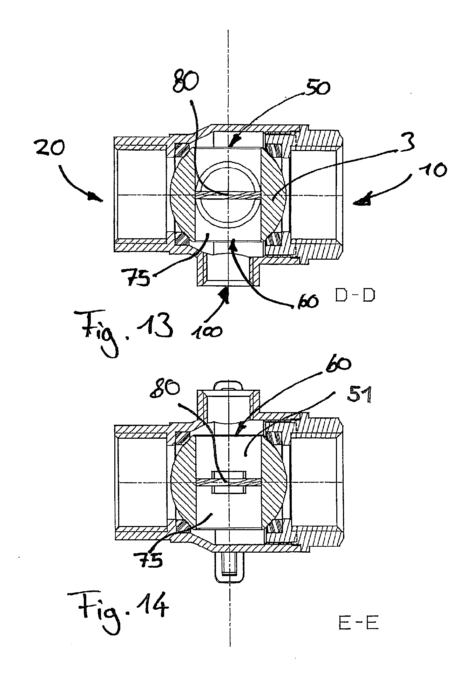

Bezug nehmend nun auf die Figuren 8 bis 14 ist das in den Figuren 1 bis 7 abgebildete Kugelabsperrventil in einer geschlossenen Ventilstellung gezeigt. Diese geschlossene Ventilstellung wird durch Verschwenken des Betätigungshebels 2 und der hiermit verbundenen Absperrkugel 3 um 90° erreicht.

Wie insbesondere aus den Figuren 11, 13 und 14 ersichtlich, ist in der geschlossenen Stellung sowohl die Gehäuseeinlassöffnung 10 als auch die Gehäuseauslassöffnung 20 durch die Absperrkugel verschlossen, da die entsprechende Kugeleinlassöffnung 50 und Kugelauslassöffnung 60 aus der fluchtenden Anordnung gemäß den Figuren 1 bis 7 herausgedreht sind und eine entsprechende Wandung der Absperrkugel in den Bereich der Gehäuseeinlassöffnung 10 und der Gehäuseauslassöffnung 20 gedreht ist.

Die Gehäuseanschlussöffnung 30 ist weiterhin fluchtend mit der Kugelanschlussöffnung 70 angeordnet, wie insbesondere aus Figur 12 zu erkennen, was dadurch konstruktiv bewirkt wird, dass die Durchflussrichtungen von Gehäuseanschlussöffnung 30 und Kugelanschlussöffnung 70 koaxial zur Drehachse der Absperrkugel 3 liegen.

In der geschlossenen Stellung ist die Kugelauslassöffnung 60 fluchtend zur Entleerungsöffnung 100 angeordnet, so dass eine direkte Fluidverbindung zwischen der Gehäuseanschlussöffnung 30 über den Austrittsabschnitt 72 der Kugelanschlussöffnung 70 und der Entleerungsöffnung 100 besteht. Dies ist insbesondere aus Figur 12 ersichtlich. Durch diese direkte Fluidverbindung kann über die Entleerungsöffnung 100 eine Entleerung einer Schleife erfolgen, die an die Gehäuseanschlussöffnung 30 angeschlossen ist.

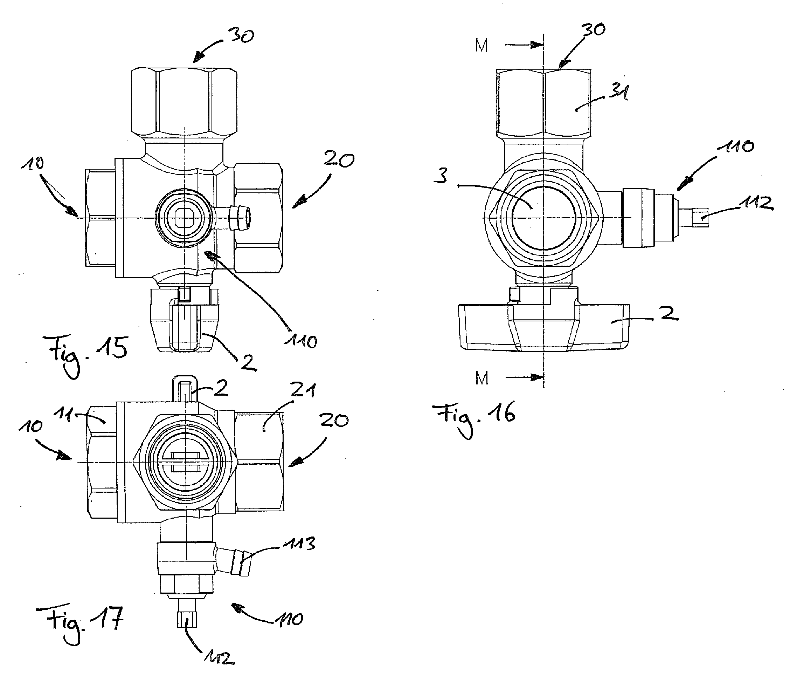

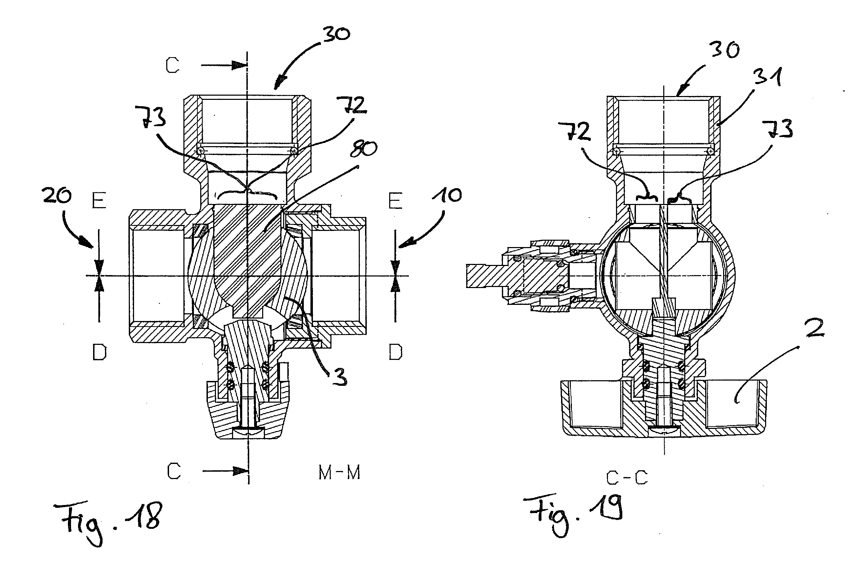

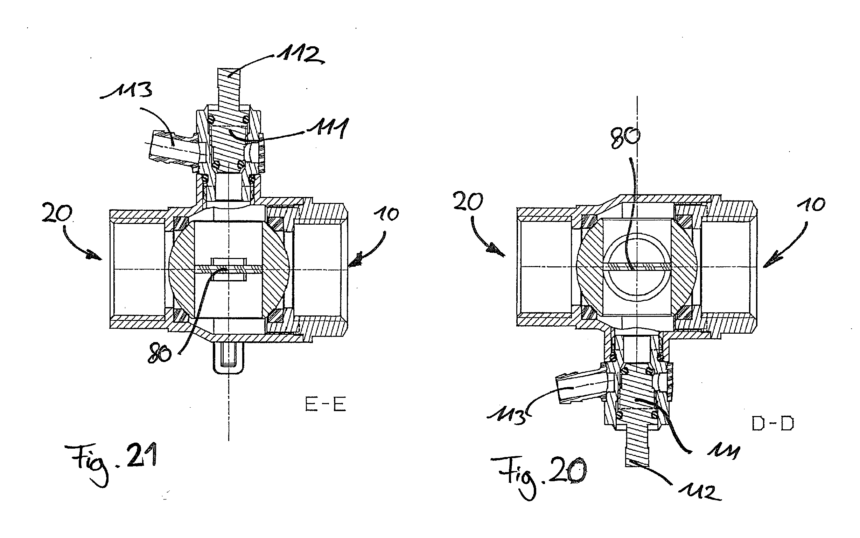

Bezug nehmend nun auf die Figuren 15-21 ist die in den Figuren 1-14 gezeigte bevorzugte Ausführungsform des erfindungsgemäßen Kugelabsperrventils mit einem in die Entleerungsöffnung 100 eingeschraubten Entleerungsventil 110 dargestellt. Das Entleerungsventil 110 weist einen koaxial zur Durchflussrichtung der Entleerungsöffnung 100 angeordneten Ventilkörper 111 auf, der mittels eines am äußeren Ende des Ventilkörpers ausgebildeten Sechskants 112 von einem Benutzer um seine Längsachse verdreht werden kann. Die Längsachse des Ventilkörpers 111 liegt koaxial zur Durchflussrichtung der Entleerungsöffnung 100 und senkrecht zur Drehachse der Absperrkugel 3 und schneidet diese Drehachse im Mittelpunkt der Absperrkugel 3.

An dem Entleerungsventil 110 ist weiterhin eine Austrittsöffnung 113 angeordnet. Der Durchfluss durch die Entleerungsöffnung 100 zu dem Entleerungsanschluss 113 kann durch Verschwenken des Ventilkörpers 111 freigegeben oder gesperrt werden. Hierdurch wird eine dosierte Entleerung einer an die Gehäuseanschlussöffnung angeschlossenen Schleife über die Entleerungsöffnung 100 und das darin eingeschraubte Entleerungsventil möglich, wenn sich das erfindungsgemäße Kugelabsperrventil in der geschlossenen Stellung befindet.

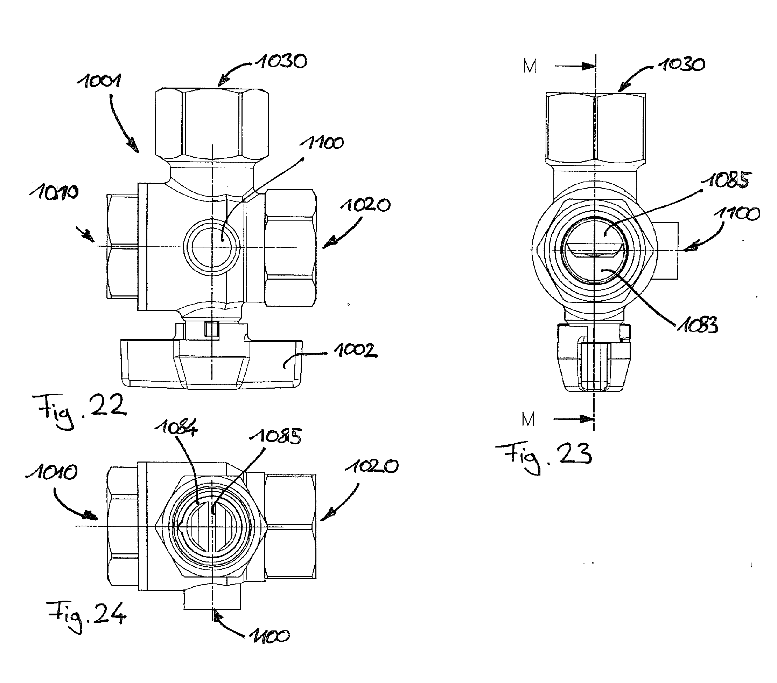

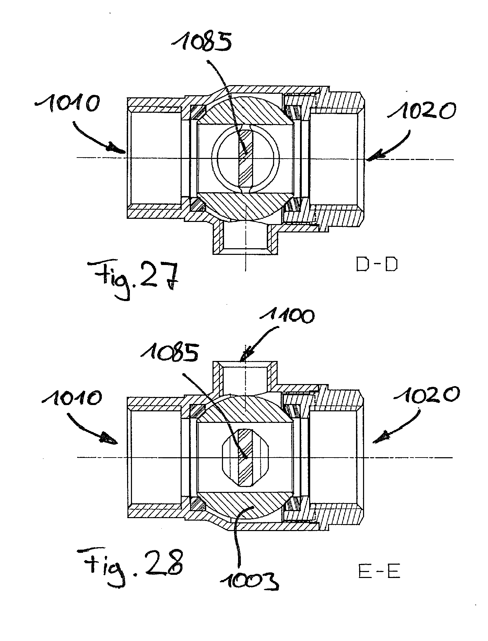

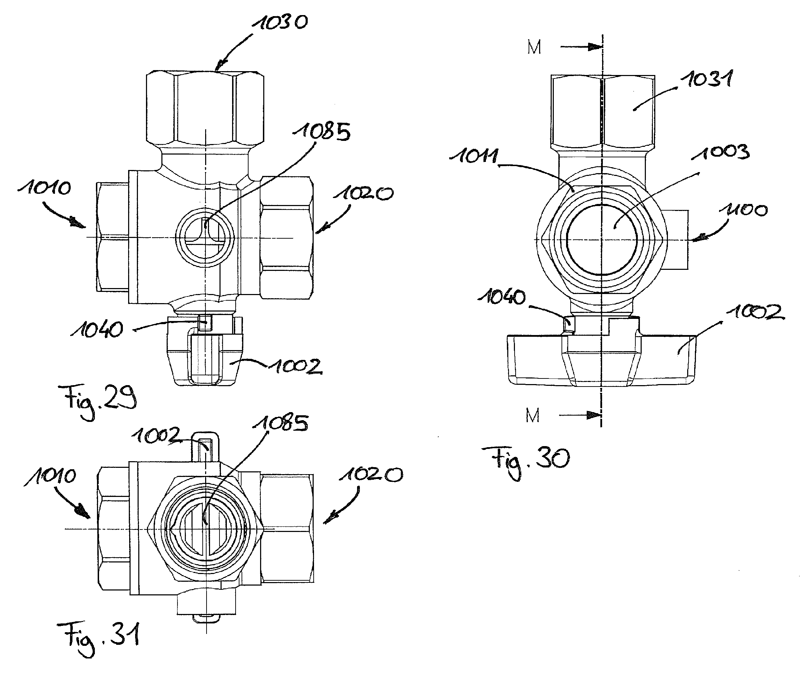

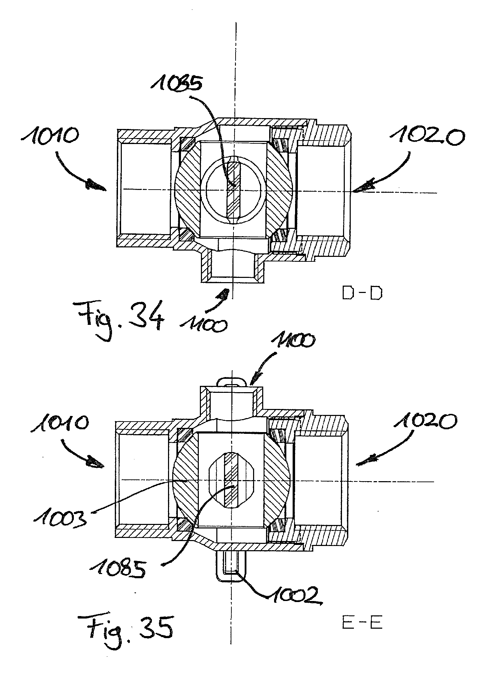

Bezug nehmend auf die Figuren 22-35 ist eine zweite Ausführungsform des erfindungsgemäßen Kugelabsperrventils gezeigt. Diese zweite Ausführungsform ist hinsichtlich der Gehäusegestaltung und der Lage aller Anschlussöffnungen sowie des Betätigungshandgriffs und dessen Ankopplung an die Absperrkugel in übereinstimmender Weise mit der zuvor erläuterten ersten Ausführungsform ausgestaltet. Auch die zweite Ausführungsform weist infolgedessen ein Gehäuse 1001 mit einer darin angeordneten Absperrkugel 1003 und einen Betätigungshandgriff 1002, der mit dieser Absperrkugel 1002 gekoppelt ist, eine Gehäuseeinlassöffnung 1010, eine Gehäuseauslassöffnung 1020, eine Gehäuseschleifenanschlussöffnung 1030, auf. Weiterhin ist auch bei der zweiten Ausführungsform eine entsprechende Entleerungsöffnung 1100 am Gehäuse ausgebildet.

Im Unterschied zu der ersten Ausführungsform weist die zweite Ausführungsform jedoch ein Sperrelement 1080 auf, das zwar ebenfalls innerhalb der Absperrkugel angeordnet ist, jedoch nicht an dieser befestigt ist. Anstelle dessen ist das Sperrelement 1080 einstückig mit einem Ringelement 1084 ausgebildet, das im Bereich zwischen der Gehäuseschleifenanschlussöffnung 1030 und der Absperrkugel 1003 am Gehäuse ortsfest befestigt ist.

Das Ringelement 1084 liegt außerhalb der Absperrkugel 1003 und ausgehend von diesem Ringelement 1084 erstreckt sich eine Sperrwand 1085 des Sperrelements 1080 in das Innere der Absperrkugel 1003.

Die Sperrwand 1085 ist an ihrem dem Ringelement 1084 gegenüberliegenden Ende mit sich in Durchflussrichtung der Gehäuseeinlass- und Auslassöffnung 1010, 1020 erstreckenden Wandabschnitten 1081, 1082 versehen. Die Sperrwand 1085 und die Wandabschnitte 1081, 1082 bilden in geschnittener Seitenansicht in geöffneter Stellung die Form eines auf dem Kopf stehenden T.

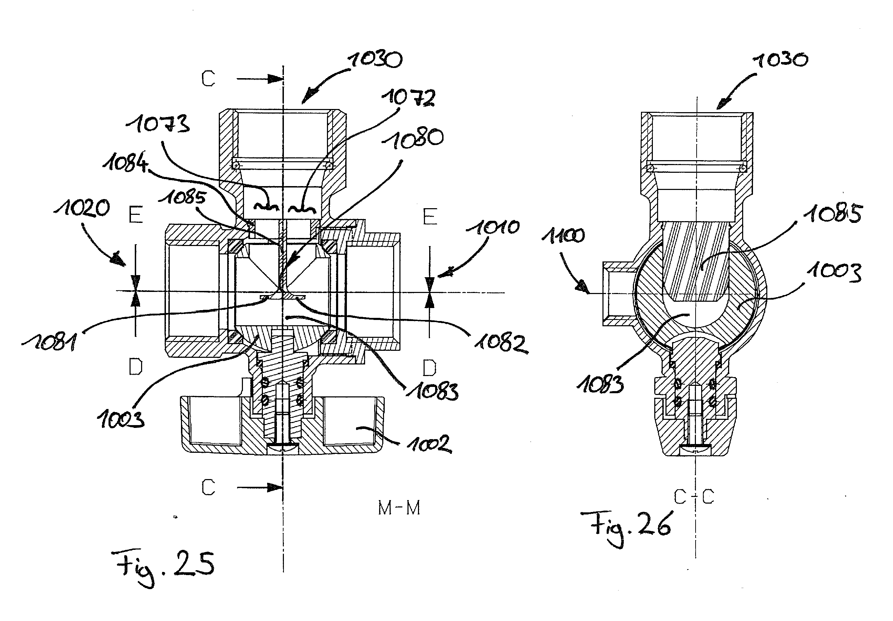

Wie insbesondere aus Figur 25 ersichtlich, erstreckt sich der Sperrwandabschnitt 1085 des Sperrelements 1080 nicht so weit in die Absperrkugel 1003, dass der direkte Durchfluss von der Gehäuseeinlassöffnung 1010 zur Gehäuseauslassöffnung 1020 vollständig verschlossen wird. Stattdessen endet das Sperrelement mit den Wandabschnitten 1081, 1082 etwas unterhalb der Mitte der Bohrung, welche die Gehäuseeinlassöffnung 1010 und die Gehäuseauslassöffnung 1020 im geöffneten Zustand durch die Absperrkugel miteinander verbindet und lässt somit einen direkten Durchgangsweg 1083 in der Absperrkugel frei. Hierdurch wird der Strömungswiderstand des gesamten Kugelabsperrventils verringert und nur ein Teil des durch die Gehäuseeinlassöffnung 1010 einströmenden Fluids dazu genutzt, die an der Gehäuseschleifenanschlussöffnung angeschlossene Schleife zu durchströmen.

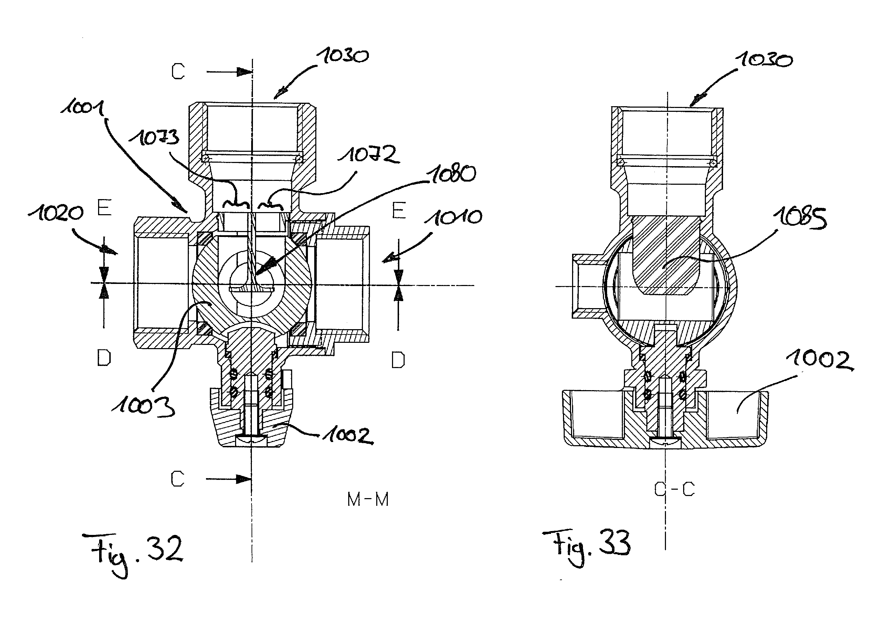

Wie im Vergleich insbesondere zwischen Figur 25 und Figur 32 zu erkennen ist, steht das Sperrelement sowohl in der geöffneten Stellung als auch in der geschlossenen Stellung in gleicher Position innerhalb des Gehäuses 1003. Dadurch sind in beiden Ventilstellungen der Eintritts- und Austrittsabschnitt 1073, 1072 mit dem Innenraum der Absperrkugel in Fluidkommunikation. Dies hat zur Folge, dass in der geöffneten Stellung eine Teilumlenkung des durch die Gehäuseeinlassöffnung 1010 einströmenden Fluids in den Austrittsabschnitt 1072 stattfindet, wie bei der zuvor erläuterten ersten Ausführungsform es für die gesamte, durch die Gehäuseeinlassöffnung 1010 eintretenden Fluidmenge erfolgt. In der geschlossenen Stellung hingegen ist die Entleerungsöffnung 1100 bei der zweiten Ausführungsform nun nicht durch das Sperrelement 1080 von dem Eintrittsabschnitt 1073 abgetrennt, sondern kommuniziert mit sowohl dem Eintritts- als auch dem Austrittsabschnitt 1073, 1072.

## Patentansprüche

1. Kugelabsperrventil für den Anschluss einer Schleife, das Kugelabsperrventil umfassend:
- ein Ventilgehäuse (1) mit
○ einer Gehäuseeinlassöffnung (10),
○ einer Gehäuseauslassöffnung (20),
○ einer Gehäuseschleifenanschlussöffnung (30),
- eine in dem Ventilgehäuse drehbar um eine Achse gelagerte Absperrkugel (3) mit
○ einer Kugeleinlassöffnung (50),
○ einer Kugelauslassöffnung (60) und
○ einer mit der Kugeleinlass- und Kugelauslassöffnung in Fluidverbindung stehenden Kugelschleifenanschlussöffnung (70),
- ein Betätigungselement (2) zum Drehen der Absperrkugel relativ zum Ventilgehäuse,
- ein in der Absperrkugel angeordnetes Sperrelement (80), welches die Kugelschleifenanschlussöffnung in einen Austritts- und einen Eintrittsabschnitt unterteilt und den direkten Fluss von Medium von der Kugeleinlassöffnung zur Kugelauslassöffnung zumindest teilweise, vorzugsweise vollständig verhindert,
- wobei das Kugelabsperrventil durch Drehung der Absperrkugel aus
○ einer ersten Stellung, in welcher ein Medienfluss von der Gehäuseeinlassöffnung durch die Kugeleinlassöffnung und den Austrittsabschnitt der Kugelschleifenanschlussöffnung zur Gehäuseschleifenanschlussöffnung und von der Gehäuseschleifenanschlussöffnung durch den Eintrittsabschnitt der Kugelschleifenanschlussöffnung und die Kugelauslassöffnung zur Gehäuseauslassöffnung freigegeben ist,
in
○ eine zweite Stellung, in welcher keine Fluidverbindung zwischen der Gehäuseeinlassöffnung und der Gehäuseschleifenanschlussöffnung besteht, verstellbar ist.

2. Kugelabsperrventil nach Anspruch 1,
**dadurch gekennzeichnet, dass** in der zweiten Stellung keine Fluidverbindung zwischen der Gehäuseeinlassöffnung und der Gehäuseauslassöffnung besteht.

3. Kugelabsperrventil nach Anspruch 1 oder 2,
**dadurch gekennzeichnet, dass** die Durchflussrichtungen der Gehäuseeinlassöffnung und Gehäuseauslassöffnung parallel, vorzugsweise koaxial zueinander angeordnet sind.

4. Kugelabsperrventil nach einem der vorhergehenden Ansprüche,
**dadurch gekennzeichnet, dass** die Durchflussrichtungen der Kugeleinlassöffnung und Kugelauslassöffnung parallel, vorzugsweise koaxial zueinander angeordnet sind und die Absperrkugel zwischen der ersten und der zweiten Stellung um 90° verdreht wird.

5. Kugelabsperrventil nach einem der vorhergehenden Ansprüche,
**dadurch gekennzeichnet, dass** die Durchflussrichtungen der Gehäuseeinlassöffnung und der Gehäuseauslassöffnung senkrecht zur Drehachse der Absperrkugel angeordnet sind.

6. Kugelabsperrventil nach einem der vorhergehenden Ansprüche,
**dadurch gekennzeichnet, dass** die Durchflussrichtungen der Kugeleinlassöffnung und der Kugelauslassöffnung senkrecht zur Drehachse der Absperrkugel angeordnet sind.

7. Kugelabsperrventil nach einem der vorhergehenden Ansprüche,
**dadurch gekennzeichnet, dass** die Durchflussrichtungen der Gehäuseschleifenanschlussöffnung und/oder die Kugelschleifenanschlussöffnung parallel, vorzugsweise koaxial zur Drehachse der Absperrkugel angeordnet sind.

8. Kugelabsperrventil nach einem der vorhergehenden Ansprüche,
**dadurch gekennzeichnet, dass** in der ersten und zweiten Stellung die Gehäuseschleifenanschlussöffnung und die Kugelschleifenanschlussöffnung in Fluidverbindung miteinander, vorzugsweise deckungsgleich sind.

9. Kugelabsperrventil nach einem der vorhergehenden Ansprüche,
**gekennzeichnet durch** eine am Gehäuse ausgebildete Entleerungsöffnung (100), welche in der ersten Stellung keine Fluidverbindung mit Gehäuseeinlassöffnung, Gehäuseauslassöffnung und Gehäuseschleifenanschlussöffnung hat und in der zweiten Stellung eine Fluidverbindung mit der Gehäuseschleifenanschlussöffnung hat.

10. Kugelabsperrventil nach dem vorhergehenden Anspruch,
**dadurch gekennzeichnet, dass** die Entleerungsöffnung in der zweiten Stellung durch einen oder beide Abschnitte der Kugelschleifenanschlussöffnung eine Fluidverbindung mit der Gehäuseschleifenanschlussöffnung hat.

11. Kugelabsperrventil nach einem der vorhergehenden Ansprüche 9-10,
**dadurch gekennzeichnet, dass** die Entleerungsöffnung in der zweiten Stellung keine Fluidverbindung mit der Gehäuseeinlassöffnung und der Gehäuseauslassöffnung hat.

12. Kugelabsperrventil nach einem der vorhergehenden Ansprüche,
**dadurch gekennzeichnet, dass** das Sperrelement an der Absperrkugel zur gemeinsamen Drehung mit dieser befestigt ist.

13. Kugelabsperrventil nach einem der vorhergehenden Ansprüche 1-11,
**dadurch gekennzeichnet, dass** das Sperrelement am Ventilgehäuse befestigt ist, insbesondere im Bereich der Gehäuseschleifenanschlussöffnung, sodass die Absperrkugel relativ zum Sperrelement drehbar ist.
